# EUROPÄISCHE PATENTSCHRIFT

(11) **EP 2 052 768 B1**
(45) Veröffentlichungstag und Bekanntmachung des Hinweises auf die Patenterteilung: **20.07.2011**
(21) Anmeldenummer: 08018536.6
(22) Anmeldetag: 23.10.2008
(51) Int. Cl.: B01D 46/00, B60T 17/00

(54) **Luftfiltersystem für ein Nutzfahrzeug und Verfahren zur Steuerung des Luftfiltersystems**
Air filter system for a commercial vehicle and method of controlling the air filter system
Système de filtre à air pour un véhicule utilitaire et procédé destiné à la commande du système de filtre à air

(30) Priorität: 25.10.2007 DE 102007051200; 03.12.2007 DE 102007058385
(43) Veröffentlichungstag der Anmeldung: 29.04.2009
(73) Patentinhaber: KNORR-BREMSE Systeme für Nutzfahrzeuge GmbH, 80809 München (DE)
(72) Erfinder: Hilberer, Eduard, 68766 Hockenheim (DE)
(74) Vertreter: Schönmann, Kurt

(56) Entgegenhaltungen:
- WO-A-01/26783
- DE-A1- 10 240 357
- DE-A1- 10 357 766

## Beschreibung

Die Erfindung betrifft ein Filtersystem für ein Nutzfahrzeug mit einem Lufttrockner mit einer Luftfilterpatrone zur Aufbereitung der geförderten Druckluft und einem am Lufttrockner beginnenden Druckluftpfad zur Versorgung einer pneumatischen Getriebesteuerung mit Druckluft.

Die Erfindung betrifft weiterhin ein Verfahren zur Steuerung eines Filtersystems für ein Nutzfahrzeug mit einem Lufttrockner mit einer Luftfilterpatrone zur Aufbereitung der geförderten Druckluft und einem am Lufttrockner beginnenden Druckluftpfad zur Versorgung einer pneumatischen Getriebesteuerung mit Druckluft.

Nutzfahrzeuge mit pneumatischen Komponenten benötigen eine Druckluftversorgungsanlage. Die Druckluft wird im Allgemeinen von einem Kompressor in eine Luftaufbereitungsanlage gefördert, wo die eingebrachte Luft in einem Lufttrockner mit angeschlossener Luftfilterpatrone gereinigt wird, um dann über ein Mehrkreisschutzventil ihrer Verwendung zugeführt zu werden, beispielsweise dem Bremssystem oder einer pneumatischen Getriebesteuerung des Nutzfahrzeugs.

Die Luftfilterpatrone umfasst üblicherweise einen oft als Koaleszenzfilter ausgeführten Vorfilter zur Entfernung von Schmutz und ölpartikeln sowie ein Trockenmittel, um der Druckluft die Feuchtigkeit zu entziehen. Insgesamt ermöglicht die Luftfilterpatrone das Bereitstellen von aufbereiteter Druckluft von definierter gleich bleibender Qualität. Die Qualität der aufbereiteten Druckluft ist dabei insbesondere für die Lebensdauer der mit Druckluft versorgten Komponenten des Nutzfahrzeugs wichtig. Schlechte Druckluftqualität kann vorzeitigen mechanischen Verschleiß und erhöhte Korrosion durch feste Partikel oder Ölpartikel und Feuchtigkeit verursachen. Hersteller von besonders empfindlichen Nutzfahrzeugkomponenten, zum Beispiel einer pneumatischen Getriebesteuerung, schreiben deshalb eine Mindestqualität hinsichtlich der zugeführten Druckluft vor, wobei die vorgeschriebene Druckluftqualität deutlich höher als die mit bisherigen Filterpatronen erreichbare Qualität liegen kann.

Eine gattungsgemäße Druckluftversorgungsanlage ist in der DE 103 57 766 A1 beschrieben und der Aufbau einer Luftfilterpatrone mit verbesserter Trockenwirkung ist in der WO 01/26783 A1 beschrieben.

Der Erfindung liegt die Aufgabe zugrunde, ein Filtersystem für Druckluft bereitzustellen, welches benötigte

Druckluft erhöhter Qualität für eine pneumatische Getriebesteuerung bereitstellt und gleichzeitig nur geringe Veränderungen bestehender Filtersysteme benötigt.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Die Erfindung baut auf dem gattungsgemäßen Filtersystem dadurch auf, dass in dem Druckluftpfad ein Luftfilter angeordnet ist, der die Druckluft für die Getriebesteuerung filtert. Das Vorsehen eines Luftfilters in dem Druckluftpfad für die pneumatische Getriebesteuerung erlaubt die gezielte Verbesserung der Druckluftqualität, die der Getriebesteuerung zugeführt wird.

Das Filtersystem kann dabei vorteilhafter Weise dadurch weiterentwickelt werden, dass das Luftfilter ein Filtergehäuse und ein Filtergewebe, dessen Porengröße kleiner als die auszufilternden Teilchen ist, aufweist. Da die der pneumatischen Getriebesteuerung zuzuführende Druckluft bereits von der Luftfilterpatrone aufbereitet wurde, enthält sie nur wenige auszufilternde Partikel, die zudem sehr klein sind. Die Verwendung eines Filtergewebes mit geringerer Porengröße als die auszufilternden Teilchen erlaubt in einfacher Weise die Ausfilterung der unerwünschten Partikel.

Vorteilhafterweise kann vorgesehen sein, dass das Luftfilter durch ein Gewinde oder einen Bajonettverschluss auswechselbar in dem Filtersystem integriert ist. Da sich die ausgefilterten Partikel in dem Filtergehäuse ansammeln, setzt sich das Luftfilter nach einer bestimmten gefilterten Luftmenge zu und wird dadurch unbrauchbar. Um die Versorgung der pneumatischen Getriebesteuerung mit gefilterter Druckluft sicherzustellen, muss das Luftfilter ausgetauscht werden.

Es kann vorgesehen sein, dass ein erster Drucksensor zur eingangsseitigen Druckbestimmung an dem Luftfilter angeordnet ist. Der auf der Eingangsseite des Luftfilters anliegende Versorgungsdruck ist eine wichtige Kenngröße für die Funktion des Luftfilters und der nachgeschalteten pneumatischen Getriebesteuerung.

Weiterhin kann vorgesehen sein, dass ein zweiter Drucksensor zur ausgangsseitigen Druckbestimmung an dem Luftfilter angeordnet ist. Der an der Ausgangsseite des Luftfilters anliegende Druck ist eine weitere wichtige Kenngröße zur Bestimmung des Beladungszustands des Luftfilters.

Es kann nützlich sein, dass ein Steuergerät zur Getriebesteuerung vorgesehen ist, wobei das Steuergerät zumindest den von dem ersten Drucksensor gemessenen Druck überwacht. Durch die Überwachung zumindest des ersten Drucksensors kann das Steuergerät im Zusammenhang mit weiteren Kenngrößen eine Aussage über den Belastungszustand des Luftfilters treffen.

Idealerweise kann vorgesehen sein, dass ein weiteres Steuergerät vorgesehen ist, das wesentliche mit der Aufbereitung der geförderten Druckluft zusammenhängende Funktionen steuert. Das weitere Steuergerät kann insbesondere eine notwendige Regeneration der Filterpatrone überwachen und steuern.

Vorteilhafterweise kann vorgesehen sein, dass das Luftfilter einen nicht zerstörungsfrei von dem Luftfilter trennbaren Transponder umfasst, der zumindest die Typenbezeichnung des Luftfilters speichert. Die Kopplung der Typenbezeichnung an das Luftfilter ermöglicht, die Verwendung eines geeigneten Luftfilters sicherzustellen. Dies gilt insbesondere, wenn das Steuergerät selbst die in den Transponder gespeicherte Typenbezeichnung des Luftfilters über eine entsprechende Erfassungseinrichtung auslesen kann.

Weiterhin kann vorgesehen sein, dass das Nutzfahrzeug ein GPS-Steuergerät mit einer Antenne und einem Anschluss an einen CAN-Bus umfasst.

Die Erfindung baut auf dem gattungsgemäßen Verfahren dadurch auf, dass ein Luftfilter in dem Druckluftpfad angeordnet wird und dass ein Steuegerät zur Getriebe steuerung vorgesehen ist.

Auf diese Weise werden die Vorteile und Besonderheiten des erfindungsgemäßen Filtersystems auch im Rahmen eines Verfahrens umgesetzt. Dies gilt auch für die nachfolgend angegebenen besonders bevorzugten Ausführungsformen des erfindungsgemäßen Verfahrens.

Dieses wird in nützlicher Weise dadurch weitergebildet, dass ein Steuergerät zur Getriebesteuerung vorgesehen ist, wobei das Steuergerät zumindest eine der folgenden Größen zur Berechnung eines Auswechselzeitpunktes für das Luftfilter verwendet:
- Leckageverhalten der Getriebesteuerung,
- Anzahl der Verbraucherbetätigungen und deren Schaltvolumen
- Vorfilterbelastungswerte,
- Filterkonstanten des Luftfilters,
- Einschaltdauer der Zündung,
- Schaltgeschwindigkeit des Getriebes.

Dabei kann es von Nutzen sein, dass das Steuergerät dem Fahrer den Belastungszustand und den Auswechselzeitpunkt für das Luftfilter über Anzeigemittel angibt. Hat das Luftfilter seine Filterkapazität erreicht, so ist ein möglichst zeitnaher Wechsel des Luftfilters von Vorteil, da ein verfrühter Austausch nicht effizient, ein verspäteter Austausch jedoch die pneumatische Getriebesteuerung gefährdet.

Vorteilhafterweise kann vorgesehen sein, dass aus eingangs- und ausgangsseitig an dem Luftfilter gemessenen Drücken der Belastungszustand des Luftfilters bestimmt wird. Der an dem Luftfilter abfallende Druck steigt mit wachsender Menge der Ablagerungen in dem Filter an. Der Druckabfall erlaubt daher Rückschlüsse auf den Belastungszustand des Luftfilters.

Zum Schutz der pneumatischen Getriebesteuerung kann vorgesehen sein, dass das Nutzfahrzeug von dem Steuergerät direkt oder indirekt stillgelegt wird, wenn das Luftfilter nicht ausgewechselt und der Auswechselzeitpunkt um einen Zeitraum Δt überschritten oder ab dem Auswechselzeitpunkt eine Laufleistung ΔS erreicht wird. Die pneumatische Getriebesteuerung des Nutzfahrzeugs ist eine verhältnismäßig teure Komponente, weshalb die vorübergehende Stilllegung des gesamten Nutzfahrzeugs der Beschädigung vorzuziehen ist. Der Auswechselzeitpunkt ist durch das Steuergerät bestimmbar und der Zeitraum Δt beziehungsweise die Laufleistung ΔS kann beispielsweise werkseitig vorgegeben worden sein.

Dabei kann idealerweise vorgesehen sein, dass das stillgelegte Fahrzeug über einen Funkimpuls oder durch einen dem Steuergerät mitgeteilten Filtertausch wieder freigegeben werden kann. Nachdem das Luftfilter getauscht wurde, ist die Betriebssicherheit der pneumatischen Getriebesteuerung gewährleistet, weshalb die Freigabe des Fahrzeugs dann sinnvoll ist. Es kann jedoch auch sinnvoll sein, das Fahrzeug per Funkimpuls freizugeben, um das Abschleppen des Nutzfahrzeugs zu vermeiden.

Nützlicherweise kann vorgesehen sein, dass das Steuergerät vor Inbetriebnahme des Filtersystems eine Systemdiagnose durchführt, dass das Steuergerät während des Betriebs regelmäßig eine Plausibilitätsüberprüfung des Systemzustandes durchführt und dass im Fehlerfall das Steuergerät eine Fehlermeldung über Anzeigemittel an den Fahrer ausgibt. Diese Verfahrensschritte ermöglichen zusammen die sichere Überwachung der Steuerung des Luftfiltersystems, um eine Fehlschaltung zu vermeiden.

Weiterhin kann vorgesehen sein, dass ein weiteres Steuergerät wesentliche mit der Aufbereitung der geförderten Druckluft zusammenhängende Funktionen steuert.

Die Erfindung wird nun mit Bezug auf die begleitenden Zeichnungen anhand einer besonders bevorzugten Ausführungsform beispielhaft erläutert.

Es zeigen:
- Figur 1: ein Nutzfahrzeug mit einem erfindungsgemäßen Filtersystem;
- Figur 2: ein Steuergerät mit angeschlossenen Komponenten und eingehenden Größen;
- Figur 3: einen Signalflussplan eines erfindungsgemäßen Verfahrens und
- Figur 4: ein Flussdiagramm eines erfindungsgemäßen Verfahrens.

In den nachfolgenden Zeichnungen bezeichnen gleiche Bezugszeichen gleiche oder gleichartige Teile.

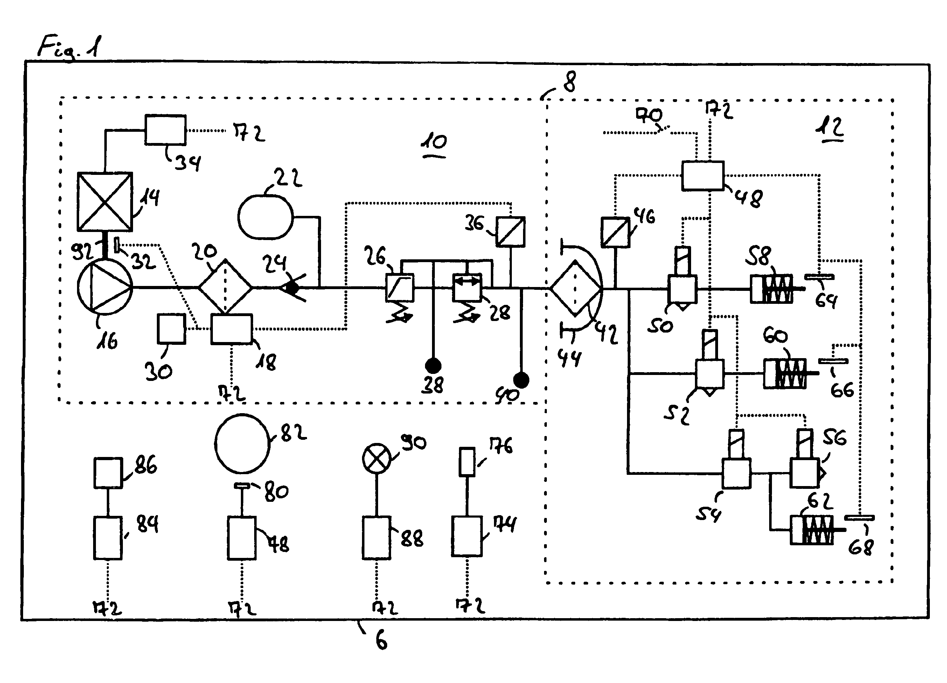

Figur 1 zeigt ein Nutzfahrzeug mit einem erfindungsgemäßen Filtersystem. Das Filtersystem 8 des Nutzfahrzeugs 6 umfasst eine Druckluftversorgungseinrichtung 10 und eine pneumatische Getriebesteuerung 12. Die Druckluftversorgungseinrichtung 10 weist einen von einem Motorsteuergerät 34 gesteuerten Motor 14 auf, der einen Kompressor 16 über eine Welle 92 antreibt. Die von dem Kompressor 16 geförderte Druckluftluft wird in einer einem nicht dargestellten Lufttrockner zugehörigen Luftfilterpatrone 20 aufbereitet und den verschiedenen Verbrauchern über Anschlüsse 38, 40 zugeführt. Weiterhin ist ein Rückschlagventil 24, ein Vorratsbehälter 22, ein Überdruckventil 26, ein Überströmventil 28, ein Temperatursensor 30, ein Drehzahlsensor 32, ein Drucksensor 36 und ein weiteres Steuergerät 18 dargestellt. Das weitere Steuergerät 18 ist mit dem Drucksensor 36 gekoppelt und kann über diesen den eingangsseitigen Druck an einem Luftfilter 42 detektieren. Es ist auch denkbar, dass der Drucksensor 36 mit einem Steuergerät 48 einer pneumatischen Getriebesteuerung 12 gekoppelt ist, die im Folgenden näher beschrieben wird. Das weitere Steuergerät 18 ist, unter anderem durch den Drucksensor 36, in der Lage, eine Druckregelsteuerung der Druckluftaufbereitungsanlage 10 durch eine elektrische Ansteuerung verschiedener nicht dargestellter Magnetventile auszuführen. Weiterhin kann das weitere Steuergerät 18 auch eine Transponderleseeinrichtung für das Luftfilter 42 steuern, über die das Luftfilter 42 betreffende Daten erfassbar sind, und nimmt wesentliche Funktionen im Zusammenhang mit der Steuerung der Druckluftaufbereitungsanlage 10, insbesondere der Regeneration der Luftfilterpatrone 20, wahr, die unter Umgehung des Rückschlagventils 24 mit aufbereiteter Druckluft aus dem Vorratsbehälter 22 regeneriert wird. Die Ausführungsform der Druckluftaufbereitungsanlage 10 ist für die vorliegende Erfindung nicht wesentlich, weshalb verschiedenste Ausführungsformen einer Druckluftaufbereitungsanlage 10 mit dem Erfindungsgedanken kombinierbar sind. An die Druckluftaufbereitungsanlage 10 ist eine pneumatische Getriebesteuerung 12 über einen Druckluftpfad gekoppelt, in dem ein Luftfilter 42 angeordnet ist, welcher über ein Gewinde 44 in dem Druckluftpfad fixiert ist. Die pneumatische Getriebesteuerung 12 umfasst ein Steuergerät 48, Ventileinrichtungen 50, 52, 54 und 56, sowie Steuerzylinder 58, 60 und 62 mit daran angeordneten Wegsensoren 64, 66 und 68. Die Steuerzylinder betätigen verschiedene Schaltgruppen eines nicht dargestellten pneumatischen Getriebes. Als mit dem CAN-BUS 72 verbundene Komponenten des Nutzfahrzeugs 6 sind weiterhin ein GPS-Steuergerät 74 mit einer Antenne 76, eine Sensorerfassungseinrichtung 78 mit einem einem Rad 82 des Nutzfahrzeugs 6 zugeordneten Drehzahlsensor 80, ein Tachograph 84 mit zugehörigem Sensor 86 und Bordinstrumente 88 mit zugehörigen Leuchtmitteln 90 dargestellt. Über den CAN-Bus 72 tauschen die dargestellten Komponenten des Nutzfahrzeugs 6 benötigte Informationen untereinander aus. Durch den Tachographen 84 können die Betriebsstunden des Luftfilters 42 berechnet werden. Alternativ könnte dies auch über eine andere Schaltung geschehen, die über ein Zeitschaltglied verfügt. Im Zusammenhang mit dem GPS-Steuergerät ist beispielsweise denkbar, ein benötigtes Ersatzteil, insbesondere das Luftfilter 42, über Funk an den ermittelten Standort zu bestellen. Das Luftfilter 42 muss nicht unbedingt der pneumatischen Getriebesteuerung 12 zugeordnet sein, es kann alternativ auch der Druckluftversorgungseinrichtung 10 zugeordnet werden. Wichtig ist lediglich die Anordnung des Luftfilters 42 in dem die pneumatische Getriebesteuerung 12 versorgenden Druckluftpfad.

Die in der Luftfilterpatrone 20 aufbereitete Druckluft wird durch das Luftfilter 42 an die pneumatische Getriebesteuerung 12 weitergeleitet. Der an der Eingangsseite des Luftfilters 42 anliegende Druck p₁ wird dabei von dem Drucksensor 36 erfasst. Der an der Ausgangsseite des Luftfilters 42 anliegende Druck p₂ wird von dem Drucksensor 46 erfasst. Die dem Luftfilter 42 nachgeordneten Ventileinrichtungen 50, 52, 54 und 56 werden von dem Steuergerät 48 angesteuert und können entweder als 3/2-Wegeventil 50, 52 oder mit derselben Funktionalität als zwei 2/2-Wegeventile 54, 56 ausgeführt sein. Die Ventileinrichtungen 50, 52, 54 und 56 ermöglichen das Be- und Entlüften der Steuerzylinder 58, 60 und 62, deren Position von den Wegsensoren 64, 66 und 68 detektiert wird. Die Steuerzylinder 58, 60, 62 können beispielsweise ein Gassenzylinder, ein Gruppenzylinder und ein Steuerzylinder zum Öffnen beziehungsweise Schließen der Kupplung sein. Die Anordnung des Luftfilters 42 im die pneumatische Getriebesteuerung 12 versorgenden Druckluftpfad ermöglicht die bedarfsgerechte Filterung der von der pneumatischen Getriebesteuerung 12 benötigten Druckluft. Nur das jeweils über die Entlüftungseinrichtungen der Ventileinrichtungen 50, 52 und 56 entweichende Luftvolumen strömt durch das Luftfilter 42 nach und wird währenddessen gefiltert. Da sich in dem Luftfilter 42 während des Betriebs Partikel absetzen, verändert sich der über das Luftfilter 42 abfallende Druck im Laufe der Zeit. Diese Druckdifferenz ist über die Drucksensoren 36 und 46 messbar und kann zur Berechnung des Belastungszustandes des Luftfilters 42 verwendet werden. Das weitere Steuergerät 48 kann über die Position der Steuerzylinder 58, 60 und 62 im Zusammenhang mit den zugehörigen Schaltvolumen und der Anzahl der Betätigungen das durch das Luftfilter 42 gefilterte Luftvolumen bestimmen. Auch das gefilterte Luftvolumen ist geeignet, den Belastungszustand des Luftfilters 42 zu bestimmen. Das weitere Steuergerät 48 kann weiterhin über den CAN-Anschluss 72 über die Bordinstrumente 88 beziehungsweise die zugehörigen Leuchtmittel 90 dem Fahrer den Belastungszustand des Luftfilters 42 anzeigen. Auch die von Sensoren 80 und 86 detektierte Fahrzeuggeschwindigkeit kann über den CAN-Bus 72 an das Steuergerät 48 übermittelt werden und zur Berechnung des Belastungszustands des Luftfilters 42 beitragen.

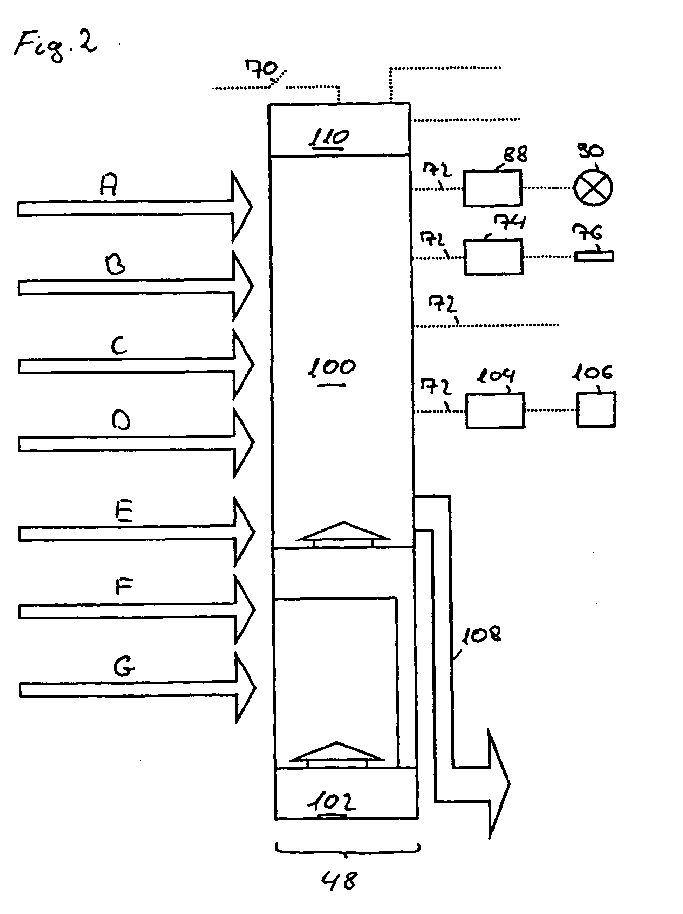

Figur 2 zeigt ein Steuergerät mit angeschlossenen Komponenten und eingehenden Größen. Das Steuergerät 48 umfasst eine Steuerlogik 100, Speicher 102 sowie ein Netzteil 110. An das weitere Streuergerät 48 sind über den CAN-Bus 72 die Bordinstrumente 88 mit Leichtmitteln 90, das GPS-Steuergerät 74 mit der Antenne 76 und eine Steuereinrichtung 104 mit einer Transponderleseeinrichtung 106 angeschlossen. Ferner ist ein I/O-Bus 108 zur Steuerung und Sensierung des Zustandes der pneumatischen Getriebesteuerung 12 vorgesehen. Über die Transponderleseeinrichtung 106 und die zugehörige Steuereinrichtung 104 kann das Steuergerät 48 die dem Luftfilter 42 durch einen Transponer aufgeprägte Typeninformation erfassen. Dazu können beispielsweise die maximal zulässige gefilterte Luftmenge und der erlaubte Druckabfall über das Luftfilter 42 gehören. Die dargestellten Eingangsgrößen, die das Steuergerät 48 zur Berechnung der Belastung des Luftfilters 42 heranzieht umfassen:
- A: Leckageverhalten der Getriebesteuerung
- B: Anzahl der Verbraucherbetätigung und deren Schaltvolumen
- C: Vorfilterbelastungswerte
- D: Filterkonstanten
- E: Einschaltdauer der Zündung
- F: Druckdifferenz p₁ - p₂ = Δp
- G: Schwellenwerte für A bis F

Durch Leckagen in der pneumatischen Getriebesteuerung 12 entweicht ständig ein gewisses Luftvolumen, welches zusätzlich durch das Luftfilter 42 gefiltert werden muss. Dieses Luftvolumen trägt zum Verschleiß des Luftfilters 42 bei. Auch die Anzahl der einzelnen Verbraucherbetätigungen und deren Schaltvolumen B, das heißt die Volumen der Steuerzylinder 58, 60 und 62 und die Anzahl ihrer Betätigungen, tragen direkt zum Verschleiß des Luftfilters 42 bei, da die verwendete Steuerluft ersetzt werden muss. Weiterhin geben die Vorfilterbelastungswerte C und die Filterkonstanten D der Luftfilterpatrone 20 und des Luftfilters 42 weitere Anhaltspunkte über den Verschleiß des Luftfilters 42. Beispielsweise würde der gleiche Luftfilter 42 verschieden schnell seine Belastungsgrenze erreichen, wenn zwei Luftfilterpatronen 20 verwendet würden, die die von dem Kompressor 16 geförderte Druckluft unterschiedlich stark reinigen. Die Einschaltdauer der Zündung E gibt einen Anhaltspunkt für die Betriebsdauer des Luftfilters 42, während der Druckdifferenz F einen direkten Rückschluss auf den momentanen Verschleiß des Luftfilters 42 ermöglicht. Offensichtlich gehören zu den genannten Größen A bis F entsprechende Schwellenwerte G, anhand derer neben dem Verschleiß des Luftfilters 42 auch ein eventueller Defektfall des Filtersystems 8 feststellbar ist. Weiterhin kann der Speicher 102 verwendet werden, um die Einschaltdauer der Zündung E und/oder die Anzahl der Verbraucherbetätigungen und deren Schaltvolumen B zu speichern. Dadurch wird es möglich, die Zeit beziehungsweise die Verbraucherbetätigungen aufzusummieren.

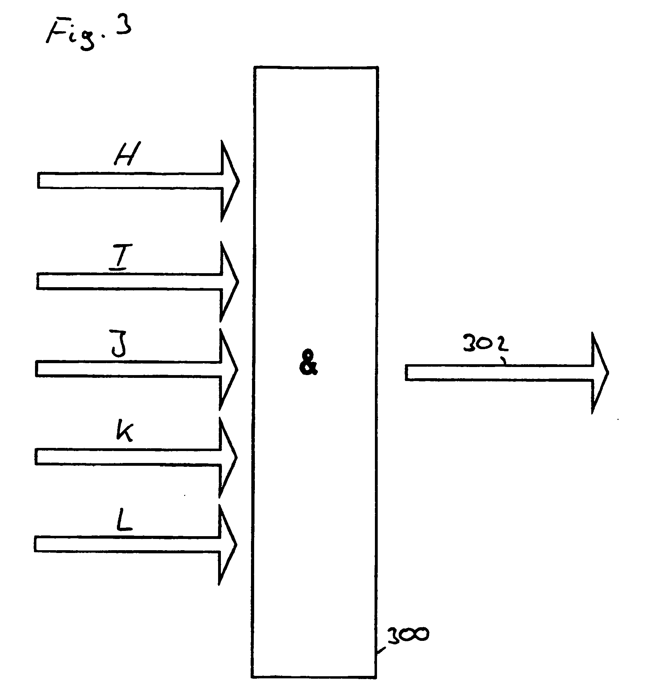

Figur 3 zeigt einen Signalflussplan eines erfindungsgemäßen Verfahrens. Zur Überprüfung des Filterstatus 300 des Luftfilters 42 können folgende Größe herangezogen werden:
- H: Getriebeversorgungsdruck
- I: Schaltgeschwindigkeit des Getriebes
- J: Gespeicherte Plausibilitätsfehler
- K: Gespeicherte Hardwarefehler
- L: Filterstrukturbotschaft

Aus diesen Größen ist in geeigneter Weise bestimmbar, ob das Warnsignal "Filterwechsel erforderlich" 302 an den Fahrer ausgegeben werden muss. Dieses Verfahren ist unabhängig von dem ausgangsseitig an dem Luftfilter 42 angeordneten Drucksensor 46 durchführbar. Der Getriebeversorgungsdruck H wird von dem Drucksensor 36 vor dem Luftfilter 42 gemessen und sollte ausreichend hoch sein. Die Schaltgeschwindigkeit des Getriebes I sollte weiterhin hinreichend hoch sein. Die Schaltgeschwindigkeit kann beispielsweise über die Wegsensoren 64, 66 und 68 bestimmt werden. Aus dem vorherigen Betrieb des Filtersystems 8 sollten keine Plausibilitätsfehler, das heißt beispielsweise keine zu geringe Schaltgeschwindigkeit des Getriebes I bei ausreichendem Getriebeversorgungsdruck H, gespeichert sein. Weiterhin sollte kein Defekt eines der pneumatischen Getriebesteuerung 12 zugehörigen Magnetventils 50, 52, 54, 56 beziehungsweise eines Sensors 64, 66, 68 aus einem vorherigen Betrieb gespeichert sein. Ist zusätzlich auch die Filterstrukturbotschaft L des Luftfilters 42 in Ordnung, das heißt beispielsweise die Gesamtstandszeit in Betriebsstunden niedriger als die erlaubte Gesamtsandszeit und die insgesamt gefilterte Luftmenge kleiner als die insgesamt zulässige gefilterte Luftmenge, so ist kein Warnsignal für einen Filterwechsel erforderlich 302.

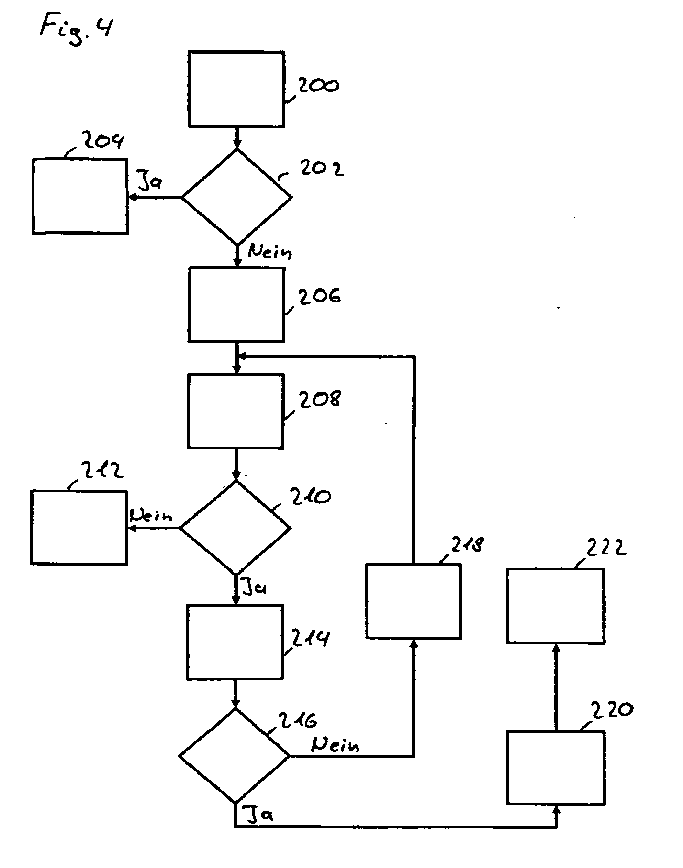

Figur 4 zeigt ein Flussdiagramm eines erfindungsgemäßen Verfahrens. Dieses Verfahren kann angewandt werden, wenn sowohl vor als auch hinter dem Luftfilter 42 ein Drucksensor vorgesehen ist. Das Verfahren startet bei 200 mit einem Plausibilitätscheck, bei dem gleichzeitig überprüft wird, ob ein Defekt eines Bauteils vorliegt. Der Plausibilitätscheck umfasst den Vergleich der vor und hinter dem Luftfilter 42 gemessenen Drücke. Somit kann auch ein unzulässig großer Luftverlust infolge einer schleichenden Leckage erkannt werden. Ist bei 202 ein Hardwarefehler detektiert, so wird bei 204 eine entsprechende Fehlermeldung ausgegeben. Das Nichtbestehen des Plausibilitätschecks hat ebenfalls die Ausgabe einer Fehlermeldung bei 204 zur Folge. Wenn das System die Überprüfung bestanden hat, so wird bei 206 die Getriebesteuerung zusammen mit der Überwachung der Filterfunktion in Betrieb genommen. Bei 208 wird zunächst wieder ein Plausibilitätscheck durchgeführt, wobei ohne Luftentnahme an einem der Steuerzylinder 58, 60, 62 der pneumatischen Getriebesteuerung 12 der Druck vor und nach dem Luftfilter 42 verglichen wird. Wird dieser Test bei 210 nicht bestanden, so wird bei 212 eine entsprechende Fehlermeldung ausgegeben. Wird der Test bestanden, so werden bei 214 die entsprechenden Drücke vor und nach dem Luftfilter 42 nach der Betätigung der pneumatischen Getriebesteuerung 12 gemessen. Anschließend wird bei 216 festgestellt, ob der Druckabfall Δp = p₁ - p₂ über das Luftfilter 42 größer als der maximal zulässige Druckabfall Δpₜₒₗ ist. Falls nein, wird bei 218 eine permanente Überwachung der Druckdifferenz an dem Luftfilter 42 eingeleitet und bei 208 fortgefahren. Ist die Druckdifferenz jedoch größer als die maximal zulässige Druckdifferenz, so wird bei 220 eine Onboardfehlermeldung an die Bordinstrumente 88 gesendet und, beispielsweise über Leuchtmittel 90, dem Fahrer der Fehler signalisiert. Anschließend wird bei stehendem Fahrzeug das Lösen der Betriebsbremse verhindert, falls weiterhin ein Zeitintervall Δt oder ein Wegintervall ΔS zum Auswechseln des Luftfilters 42 überschritten wurde.

Die in der vorstehenden Beschreibung, in den Zeichnungen sowie in den Ansprüchen offenbarten Merkmale der Erfindung können sowohl einzeln als auch in beliebiger Reihenfolge für die Verwirklichung der Erfindung wesentlich sein.

### Bezugszeichenliste

- 6: Nutzfahrzeug
- 8: Filtersystem
- 10: Druckluftversorgungseinrichtung
- 12: pneumatische Getriebesteuerung
- 14: Motor
- 16: Kompressor
- 18: weiteres Steuergerät
- 20: Luftfilterpatrone
- 22: Vorratsbehälter
- 24: Rückschlagventil
- 26: Überdruckventil
- 28: Überströmventil
- 30: Temperatursensor
- 32: Drehzahlsensor
- 34: Motorsteuergerät
- 36: Drucksensor
- 38: Anschluss Betriebsbremse
- 40: Anschluss
- 42: Luftfilter
- 44: Gewinde
- 46: Drucksensor
- 48: Steuergerät
- 50: Ventileinrichtung
- 52: Ventileinrichtung
- 54: Ventileinrichtung
- 56: Ventileinrichtung
- 58: Steuerzylinder
- 60: Steuerzylinder
- 62: Steuerzylinder
- 64: Wegsensor
- 66: Wegsensor
- 68: Wegsensor
- 70: Zündung
- 72: Anschluss CAN
- 74: Steuergerät GPS
- 76: Antenne
- 78: Sensorerfassungseinrichtung
- 80: Raddrehzahlsensor
- 82: Rad
- 84: Tachograph
- 86: Sensor
- 88: Bordinstrumente
- 90: Leuchtmittel
- 92: Welle
- 100: Steuerlogik
- 102: Speicher
- 104: Steuereinrichtung
- 106: Transponderleseeinrichtung
- 108: I/O-Bus
- 110: Netzteil
- 200: Plausibilitätscheck
- 202: Hardwarefehler detektiert?
- 204: Fehlermeldung ausgeben
- 206: Systeminbetriebnahme

- 208: Plausibilitätsprüfung ohne Luftentnahme
- 210: Erfolgreich?
- 212: Fehlermeldung ausgeben
- 214: Messung Druckdifferenz mit Luftentnahme
- 216: Druckdifferenz größer als Toleranzwert?
- 218: Permanente Druckermittlung bei Luftentnahme
- 220: Senden einer Onboardfehlermeldung
- 222: Sperren der Bremse bei stehendem Fahrzeug
- 300: Überprüfung Filterstatus
- 302: Warnsignal "Filterwechsel erforderlich"
- A: Leckageverhalten der Getriebesteuerung
- B: Anzahl der Verbraucherbetätigungen und deren Schalt-volumen
- C: Vorfilterbelastungswerte
- D: Filterkonstanten
- E: Einschaltdauer der Zündung
- F: Druckdifferenz p₁-p₂=Δp
- G: Schwellenwerte für A bis F
- H: Getriebeversorgungsdruck
- I: Schaltgeschwindigkeit des Getriebes
- J: Gespeicherte Plausibilitätsfehler
- K: Gespeicherte Hardwarefehler
- L: Filterstrukturbotschaft

## Patentansprüche

1. Filtersystem (8) für ein Nutzfahrzeug (6) mit
- einem Lufttrockner mit einer Luftfilterpatrone (20) zur Aufbereitung der geförderten Druckluft und
- einem am Lufttrockner beginnenden Druckluftpfad zur Versorgung einer pneumatischen Getriebesteuerung (12) mit Druckluft,
**dadurch gekennzeichnet,**
- **dass** in dem Druckluftpfad ein Luftfilter (42) angeordnet ist, der die Druckluft für die Getriebesteuerung (12) filtert, und
- **dass** weiterhin ein Steuergerät (48) zur Getriebesteuerung vorgesehen ist, wobei das Steuergerät (48) zumindest eine der folgenden Größen zur Berechnung eines Auswechselzeitpunktes für das Luftfilter (42) verwendet:
- Leckageverhalten der Getriebesteuerung,
- Anzahl der Verbraucherbetätigungen und deren Schaltvolumen,
- Vorfilterbelastungswerte,
- Filterkonstanten des Luftfilters,
- Einschaltdauer der Zündung,
- Schaltgeschwindigkeit des Getriebes.

2. Filtersystem (8) nach Anspruch 1, **dadurch gekennzeichnet, dass** das Luftfilter (42) ein Filtergehäuse und ein Filtergewebe, dessen Porengröße kleiner als die auszufilternden Teilchen ist, aufweist.

3. Filtersystem (8) nach Anspruch 1 oder 2, **dadurch gekennzeichnet, dass** das Luftfilter (42) durch ein Gewinde (44) oder einen Bajonettverschluss auswechselbar in dem Filtersystem (8) integriert ist.

4. Filtersystem (8) nach einem der vorhergehenden Ansprüche, **dadurch gekennzeichnet, dass** ein erster Drucksensor (36) zur eingangsseitigen Druckbestimmung an dem Luftfilter (42) angeordnet ist.

5. Filtersystem (8) nach Anspruch 4, **dadurch gekennzeichnet, dass** ein zweiter Drucksensor (46) zur ausgangsseitigen Druckbestimmung an dem Luftfilter (42) angeordnet ist.

6. Filtersystem (8) nach Anspruch 4 oder 5, **dadurch gekennzeichnet, dass** das Steuergerät (48) zumindest den von dem ersten Drucksensor (36) gemessenen Druck überwacht.

7. Filtersystem (8) nach einem der vorhergehenden Ansprüche, **dadurch gekennzeichnet, dass** ein weiteres Steuergerät (18) vorgesehen ist, das wesentliche mit der Aufbereitung der geförderten Druckluft zusammenhängende Funktionen steuert.

8. Filtersystem (8) nach einem der vorhergehenden Ansprüche, **dadurch gekennzeichnet, dass** das Luftfilter (42) einen nicht zerstörungsfrei von dem Luftfilter (42)
trennbaren Transponder umfasst, der zumindest die Typenbezeichnung des Luftfilters (42) speichert.

9. Filtersystem (8) nach einem der vorhergehenden Ansprüche, **dadurch gekennzeichnet, dass** das Nutzfahrzeug (6).ein GPS-Steuergerät (74) mit einer Antenne (76) und einem Anschluss (72) an einen CAN-Bus umfasst.

10. Nutzfahrzeug (6) mit einem Filtersystem (8) nach einem der vorhergehenden Anspruche.

11. Verfahren zur Steuerung eines Filtersystems (8) für ein Nutzfahrzeug (6) mit
- einem Lufttrockner mit einer Luftfilterpatrone (20) zur Aufbereitung der geförderten Druckluft und
- einem am Lufttrockner beginnenden Druckluftpfad zur Versorgung einer pneumatischen Getriebesteuerung (12) mit Druckluft,
**dadurch gekennzeichnet, dass** ein Steuergerät (48) zur Getriebesteuerung und ein Luftfilter (42) in dem Druckluftpfad vorgesehen sind, wobei das Steuergerät (48) zumindest eine der folgenden Größen zur Berechnung eines Auswechselzeitpunktes für das Luftfilter (42) verwendet:
- Leckageverhalten der Getriebesteuerung,
- Anzahl der Verbraucherbetätigungen und deren Schaltvolumen,
- Vorfilterbelastungswerte,
- Filterkonstanten des Luftfilters,
- Einschaltdauer der Zündung,
- Schaltgeschwindigkeit des Getriebes.

12. Verfahren nach Anspruch 11, **dadurch gekennzeichnet, dass** das Steuergerät (48) dem Fahrer den Belastungszustand und den Auswechselzeitpunkt für das Luftfilter (42) über Anzeigemittel (88, 90) angibt.

13. Verfahren nach Anspruch 11 oder 12, **dadurch gekennzeichnet, dass** aus eingangs- und ausgangsseitig an dem Luftfilter (42) gemessenen Drücken der Belastungszustand des Luftfilters (42) bestimmt wird.

14. Verfahren nach einem der Ansprüche 11 bis 13, **dadurch gekennzeichnet, dass** das Nutzfahrzeug (6) von dem Steuergerät (48) direkt oder indirekt stillgelegt wird, wenn das Luftfilter (42) nicht ausgewechselt und der Auswechselzeitpunkt um einen Zeitraum Δt überschritten oder ab dem Auswechselzeitpunkt eine Laufleistung ΔS erreicht wird.

15. Verfahren nach Anspruch 14, **dadurch gekennzeichnet, dass** das stillgelegt Nutzfahrzeug (6) über einen Funkimpuls oder durch einen dem Steuergerät (48) mitgeteilten Filtertausch wieder freigegeben werden kann.

16. Verfahren nach einem der Ansprüche 11 bis 15, **dadurch gekennzeichnet,**
- **dass** das Steuergerät (48) vor Inbetriebnahme des Filtersystems (8) eine Systemdiagnose durchführt,
- **dass** das Steuergerät (48) während des Betriebs regelmäßig eine Plausibilitätsüberprüfung des Systemzustands durchführt und
- **dass** im Fehlerfall das Steuergerät (48) eine Fehlermeldung über Anzeigemittel (88, 90) an den Fahrer ausgibt.

17. Verfahren nach einem der Ansprüche 11 bis 16, **dadurch gekennzeichnet, dass** ein weiteres Steuergerät (18) wesentliche mit der Aufbereitung der geförderten Druckluft zusammenhängende Funktionen steuert.

## Claims

1. Filter system (8) for a commercial vehicle (6), with
- an air dryer with an air filter cartridge (20) for preparing the compressed air delivered, and
- a compressed air flow path that begins at the air dryer for supplying compressed air to a pneumatic transmission control unit (12),
**characterised in that**
- in the compressed air flow path is arranged an air filter (42), which filters the compressed air for the pneumatic transmission control unit (12), and
- in addition a control device (48) for the transmission control unit is provided, such that the said control device (48) uses at least one of the following magnitudes for calculating an exchange time for the air filter (42):
- leakage behaviour of the transmission control unit,
- number of consumer actuations and their shifting volume,
- pre-filter loading values,
- filter constants of the air filter,
- switched-on duration of the ignition,
- shifting speed of the transmission.

2. Filter system (8) according to Claim 1, **characterised in that** the air filter (42) comprises a filter housing and a filter fabric whose pore size is smaller than the particles to be filtered out.

3. Filter system (8) according to Claims 1 or 2, **characterised in that** the air filter (42) is integrated in the filter system (8) by means of a thread joint (44) or a bayonet fastening, and can be exchanged.

4. Filter system (8) according to any of the preceding claims, **characterised in that** a first pressure sensor (36) is arranged on the air filter (42) for determining the pressure on the inlet side.

5. Filter system (8) according to Claim 4, **characterised in that** a second pressure sensor (46) is arranged on the air filter (42) for determining the pressure on the outlet side.

6. Filter system (8) according to Claims 4 or 5, **characterised in that** the control device (48) monitors at least the pressure measured by the first pressure sensor (36).

7. Filter system (8) according to any of the preceding claims, **characterised in that** a further control device (18) is provided, which controls functions essentially relating to the preparation of the compressed air delivered.

8. Filter system (8) according to any of the preceding claims, **characterised in that** the air filter (42) comprises a transponder that cannot be separated non-destructively from the air filter (42), which stores at least the type designation of the air filter (42).

9. Filter system (8) according to any of the preceding claims, **characterised in that** the commercial vehicle comprises a GPS control unit (74) with an antenna (76) and a connection to a CAN bus.

10. Commercial vehicle (6) with a filter system (8) according to any of the preceding claims.

11. Method for controlling a filter system (8) for a commercial vehicle (6) with
- an air dryer with an air filter cartridge (20) for preparing the compressed air delivered, and
- a compressed air flow path that begins at the air dryer, for supplying compressed air to a pneumatic transmission control unit (12), **characterised in that** a control device (48) for the transmission control unit and an air filter (42) are provided in the compressed air flow path, such that the control device (48) uses at least one of the following magnitudes for calculating an exchange time for the air filter (42):
- leakage behaviour of the transmission control unit,
- number of consumer actuations and their shifting volume,
- pre-filter loading values,
- filter constants of the air filter,
- switched-on duration of the ignition,
- shifting speed of the transmission.

12. Method according to Claim 11, **characterised in that** the control device (48) indicates to the driver the loading condition and the exchange time for the air filter (42) by display means (88, 90).

13. Method according to Claims 11 or 12, **characterised in that** the loading condition of the air filter (42) is determined from pressures measured on the inlet and outlet sides of the air filter (42).

14. Method according to any of Claims 11 to 13, **characterised in that** the commercial vehicle (6) is directly or indirectly immobilised by the control device (48) if the air filter (42) has not been exchanged and the exchange time has been exceeded by a time period Δt, or from the exchange time a distance ΔS has been covered.

15. Method according to Claim 14, **characterised in that** the immobilised commercial vehicle (6) can be released again by a radio pulse or when a filter change has been notified to the control device (48).

16. Method according to any of Claims 11 to 15, **characterised in that**
- the control device (48) carries out a system diagnosis before operation of the filter system (8) begins,
- during operation the control device (48) carries out a plausibility check of the system's condition at regular intervals, and
- in the event of a fault the control device (48) emits an error message to the driver by display means (88, 90).

17. Method according to any of Claims 11 to 16, **characterised in that** a further control device (18) controls functions essentially relating to the preparation of the compressed air delivered.

## Revendications

1. Système (8) de filtration pour un véhicule (6) utilitaire, comprenant
- un sécheur d'air ayant une cartouche (20) de filtre d'air pour la préparation de l'air comprimé acheminé, et
- un trajet d'air comprimé commençant sur le sécheur d'air pour l'alimentation en air comprimé d'une commande (12) pneumatique de transmission,
**caractérisé**
- **en ce que** dans le trajet d'air comprimé est monté un filtre (42) d'air, qui filtre l'air comprimé pour la commande (12) de la transmission, et
- **en ce qu'**il est prévu, en outre, un appareil (48) de commande pour la commande de la transmission, l'appareil (48) de commande utilisant au moins l'une des grandeurs suivantes pour calculer un instant de remplacement du filtre (42) d'air :
- tenue aux fuites de la commande de la transmission,
- nombre des actionnements par l'utilisateur et leur volume de commutation,
- valeurs de charge du préfiltre,
- constantes de filtre du filtre à air,
- durée de mise en route de l'allumage,
- vitesse de commutation de la transmission.

2. Système (8) de filtration suivant la revendication 1, **caractérisé en ce que** le filtre (42) d'air comporte un boîtier de filtre et un tissu filtrant dont la dimension de pore est plus petite que les particules à séparer par filtration.

3. Système (8) de filtration suivant la revendication 1 ou 2, **caractérisé en ce que** le filtre (42) d'air est intégré de manière remplaçable dans le système (8) de filtration par un filetage (44) ou par une fermeture à baïonnette.

4. Système (8) de filtration suivant l'une des revendications précédentes, **caractérisé en ce qu'**un premier capteur (36) de pression, pour la détermination de la pression du côté de l'entrée, est monté sur le filtre (42) d'air.

5. Système (8) de filtration suivant la revendication 4, **caractérisé en ce qu'**un deuxième capteur (46) de pression, pour la détermination de la pression du côté de la sortie, est monté sur le filtre (42) d'air.

6. Système (8) de filtration suivant la revendication 4 ou 5, **caractérisé en ce que** l'appareil (48) de commande contrôle au moins la pression mesurée par le premier capteur (36) de pression.

7. Système (8) de filtration suivant l'une des revendications précédentes, **caractérisé en ce qu'**il est prévu un autre appareil de commande, qui commande des fonctions ayant essentiellement un rapport avec la préparation de l'air comprimé acheminé.

8. Système (8) de filtration suivant l'une des revendications précédentes, **caractérisé en ce que** le filtre (42) d'air comprend un transpondeur qui ne peut pas être séparé sans destruction du filtre (42) d'air et qui mémorise au moins la désignation de type du filtre (42) d'air.

9. Système (8) de filtration suivant l'une des revendications précédentes, **caractérisé en ce que** le véhicule (6) utilitaire comprend un appareil (74) de commande de GPS, ayant une antenne (76) et une connexion (72) à un bus CAN.

10. Véhicule (6) utilitaire ayant un système (8) de filtration suivant l'une des revendications précédentes.

11. Procédé de commande d'un système (8) de filtration pour véhicule (6) utilitaire comprenant :
- un sécheur d'air ayant une cartouche (20) de filtre d'air pour la préparation de l'air comprimé véhiculé, et
- un trajet d'air comprimé commençant sur le sécheur d'air pour l'alimentation en air comprimé d'une commande (12) pneumatique de transmission,
**caractérisé en ce qu'**un appareil (48) de commande pour la commande de la transmission et un filtre (42) d'air sont prévus dans le trajet de l'air comprimé, l'appareil (48) de commande utilisant au moins l'une des grandeurs suivantes pour le calcul d'un instant de remplacement du filtre (42) d'air :
- tenue aux fuites de la commande de la transmission,
- nombre des actionnements par l'utilisateur et leur volume de commutation,
- valeurs de charge du préfiltre,
- constantes de filtre du filtre à air,
- durée de mise en route de l'allumage,
- vitesse de commutation de la transmission.

12. Procédé suivant la revendication 11, **caractérisé en ce que** l'appareil (48) de commande indique au conducteur, par des moyens (88, 90) d'affichage l'état de charge et l'instant de remplacement du filtre (42) d'air.

13. Procédé suivant la revendication 11 ou 12, **caractérisé en ce qu'**on détermine l'état de charge du filtre (42) d'air à partir de pressions mesurées sur le filtre (42) d'air du côté de l'entrée et du côté de la sortie.

14. Procédé suivant l'une des revendications 11 à 13, **caractérisé en ce que** le véhicule (6) utilitaire est mis à l'arrêt directement ou indirectement par l'appareil (48) de commande, si le filtre (42) d'air n'est pas remplacé et si l'instant de remplacement est dépassé d'un laps de temps Δt ou si un kilométrage parcouru ΔS depuis l'instant de remplacement est dépassé.

15. Procédé suivant la revendication 14, **caractérisé en ce que** le véhicule (6) utilitaire mis à l'arrêt peut être relibéré par un signal radio ou par un remplacement du filtre annoncé à l'appareil (48) de commande.

16. Procédé suivant l'une des revendications 11 à 15, **caractérisé,**
- **en ce que** l'appareil (48) de commande effectue un diagnostic du système avant la mise en fonctionnement du système (8) de filtration,
- **en ce que** l'appareil (48) de commande effectue pendant un fonctionnement régulièrement un contrôle de vraisemblance de l'état du système et,
- **en ce qu'**en cas de défaillance de l'appareil (48) de commande, un message de défaillance est envoyé au conducteur par des moyens (88, 90) d'affichage.

17. Procédé suivant l'une des revendications 11 à 16, **caractérisé en ce qu'**un autre appareil (18) de commande commande des fonctions ayant essentiellement un rapport avec la préparation de l'air comprimé acheminé.
